# EUROPEAN PATENT APPLICATION

(11) **EP 3 876 313 A1**
(43) Date of publication of application: **08.09.2021**
(21) Application number: 21160330.3
(22) Date of filing: 02.03.2021
(51) Int. Cl.: H01M 4/133, H01M 4/1393, H01M 4/36, H01M 4/583, H01M 10/0525, H01M 4/02, H01M 4/587

(54) **NEGATIVE ACTIVE MATERIAL FOR RECHARGEABLE LITHIUM BATTERY AND RECHARGEABLE LITHIUM BATTERY INCLUDING SAME**

(30) Priority: 03.03.2020 KR 20200026661
(71) Applicant: Samsung SDI Co., Ltd., Yongin-si, Gyeonggi-do 17084 (KR)
(72) Inventor: LEE, Eunjoo, 17084 Yongin-si (KR); KIM, Narae, 17084 Yongin-si (KR); MOON, Joongho, 17084 Yongin-si (KR); PARK, Sunil, 17084 Yongin-si (KR)
(74) Representative: Shearman, James Ward

(57) **Abstract**

Disclosed is a negative active material for a rechargeable lithium battery and a rechargeable lithium battery including the same, and the negative active material includes: a core of a secondary particle in which a plurality of primary particles are agglomerated and the primary particles include a natural graphite; and a coating layer including amorphous carbon and surrounding the core, wherein, in Raman spectrum analysis of the negative active material, a peak intensity ratio (I_{D}/I_{D'}) of a peak intensity (I_{D}) of a D peak (1350 cm⁻¹ to 1370 cm⁻¹) to a peak intensity (I_{D'}) of a D' peak (1570 cm⁻¹ to 1620 cm⁻¹) is about 3.2 to about 3.8, and a lattice constant La is about 30 nm to about 45 nm.

## Description

### BACKGROUND OF THE INVENTION

### (a) Field of the Invention

This relates to a negative active material for a rechargeable lithium battery and a rechargeable lithium battery including the same.

### (b) Description of the Related Art

Technology development for realizing high capacity of a rechargeable lithium battery has been continuously made due to an increasing demand on mobile equipment or a portable battery.

As for a positive active material of a rechargeable lithium battery, a lithium-transition metal oxide having a structure capable of intercalating lithium ions such as LiCoO₂, LiMn₂O₄, LiNi₁₋ₓCoₓO₂ (0 < x < 1), and the like has been used.

As for a negative active material, Si-based active materials including Si and Sn, or various carbon-based materials including artificial graphite, natural graphite, and hard carbon capable of intercalating and deintercalating lithium ions have been used.

The above information disclosed in this Background section is only for enhancement of understanding of the background of the invention, and therefore it may contain information that does not form the prior art that is already known in this country to a person of ordinary skill in the art.

### SUMMARY OF THE INVENTION

One embodiment provides a negative active material for a rechargeable lithium battery exhibiting excellent chargeability and dischargeability characteristics.

Another embodiment provides a rechargeable lithium battery including the negative active material.

One embodiment provides negative active material for a rechargeable lithium battery, including a core of a secondary particle in which a plurality of primary particles are agglomerated and the primary particles include a natural graphite; and a coating layer including amorphous carbon and surrounding the core, wherein, in Raman spectrum analysis of the negative active material, a peak intensity ratio (I_{D}/I_{D'}) of a peak intensity (I_{D}) of a D peak (1350 cm⁻¹ to 1370 cm⁻¹) to a peak intensity (I_{D'}) of a D' peak (1570 cm⁻¹ to 1620 cm⁻¹) is about 3.2 to about 3.8, and a lattice constant La is about 30 nm to about 45 nm.

The lattice constant La may be about 40 nm to about 45 nm.

The natural graphite may be a flake-type natural graphite.

The secondary particle may further include amorphous carbon filled between the primary particles.

The coating layer may have a thickness of about 5 nm to about 50 nm.

The core may have a cabbage shape by randomly bulbing up and agglomerating at least one primary particle.

The secondary particle may have a particle diameter about 8 µm to about 24 µm.

Another embodiment provides a lithium secondary battery including: a negative electrode including: the negative active material; a positive electrode including a positive active material; and an electrolyte.

At least some of the above and other features of the invention are set out in the claims.

The negative active material for a rechargeable lithium battery according to one embodiment may exhibit excellent charge rate and discharge rate characteristics.

### BRIEF DESCRIPTION OF THE DRAWINGS

FIG. 1 is a drawing schematically showing a negative active material according to one embodiment.
FIG. 2 is a drawing schematically showing a secondary particle of the conventional negative active material.
FIG. 3 a drawing schematically showing a structure of the rechargeable lithium battery according to one embodiment.
FIG. 4A is a SEM photograph of a negative active material according to Example 1.
FIG. 4B is a drawing showing a structure of the negative active material of FIG. 1 added to the SEM photograph of FIG. 4A.
FIG. 5A is a SEM photograph of the negative active material according to Comparative Example 1.
FIG. 5B is a drawing showing a structure of the negative active material of FIG. 2 added to the SEM photograph of FIG. 5A.

### DETAILED DESCRIPTION OF THE INVENTION

Hereinafter, embodiments are described in detail. However, the present invention is not limited to these embodiments and is defined by the scope of the following claims.

A negative active material for a rechargeable lithium battery according to one embodiment includes: a core of a secondary particle in which a plurality of primary particles are agglomerated and the primary particles include a natural graphite; and a coating layer including amorphous carbon surrounding the core.

In one embodiment, the core indicates a region positioned inside of the active material, and when it is described in more detail, the core is a region surrounded with a coating layer, so that it indicates a region which is not substantially mostly exposed outward. Thus, a region positioned on the surface portion (outside) of the active material is considered to be a coating layer and a region positioned inside of the coating layer is considered to be a core.

In Raman spectrum analysis of the negative active material, a peak intensity ratio (I_{D}/I_{D'}) of a peak intensity (I_{D}) of a D peak (1350 cm⁻¹ to 1370 cm⁻¹) to a peak intensity (I_{D'}) of a D' peak (1570 cm⁻¹ to 1620 cm⁻¹) is about 3.2 to about 3.8 and a lattice constant La is about 30 nm to about 45 nm. Furthermore, a lattice constant La of the negative active material may be about 35 nm to about 45 nm or about 40 nm to about 45 nm.

When the peak intensity ratio (I_{D}/I_{D'}) of the negative active material satisfies the range of about 3.2 to about 3.8, and the lattice constant La satisfies in the range of about 30 nm to about 45 nm, it is desirable as the excellent charge rate and discharge rate characteristics, particularly excellent high-rate charge and discharge rate characteristics may be provided. If the peak intensity ratio (I_{D}/I_{D'}) is lower than 3.2 or higher than 3.8, although the lattice constant La is within the range, it is not desired because the charge rate characteristic or the discharge rate characteristic may be deteriorated. Furthermore, even when lattice constant La is lower than 30 nm or higher than 45 nm, although the peak intensity ratio (I_{D}/I_{D'}) is within the range, it is not desired because the charge rate characteristic or the discharge rate characteristic may be deteriorated. That is, when the negative active material according to one embodiment has the peak intensity ratio (I_{D}/I_{D'}) and the lattice constant La which satisfy the range, the excellent charge rate and discharge rate characteristics, and particularly high-rate charge and discharge rate characteristics, may be exhibited. If one of these is not satisfied, the excellent charge and discharge rate characteristics may be not obtained.

The peak intensity ratio (I_{D}/I_{D'}) refers to a peak intensity (I_{D}/I_{D'}) of a peak intensity (I_{D}) of the D peak (1350 cm⁻¹ to 1370 cm⁻¹) to a peak intensity (I_{D'}) of the D' peak (1570 cm⁻¹ to 1620 cm⁻¹). In the specification, the Raman spectrum peak intensity may be obtained using a laser of about a 514 nm wavelength or a laser of about a 633 nm wavelength, unless specifically defined.

According to one embodiment, the peak intensity may be measured by using a laser of about a 514 nm wavelength. The interpretation of such Raman spectrum may be generally classified as a height ratio or an integral area ratio of the peak obtained from the Raman spectrum, and indicates the height ratio in one embodiment of the present invention.

The lattice constant La may be measured by an X-ray diffraction analysis using a CuKα ray as a target line, and herein, the measurement condition may be a general measurement condition in the related art. For example, the measurement condition may be power of about 35 kV to about 40 kV, and about 90 mA to about 100 mA, 2θ= 10° to 90°, time /step (time per step) of 25 s to 55 s, and step size (°/step) of 0.01 to 0.02.

A negative active material according to one embodiment includes a core including a secondary particle in which a plurality of primary particles are agglomerated, and includes natural graphite and a coating layer surrounding the core and including amorphous carbon.

In one embodiment, the core may be a secondary particle having a cabbage shape by randomly bulbing up and agglomerating at least one primary particle. That is, the core may be one in which at least one primary particle which is laminated with at least one graphene, is bent, crushed, and spheroidized so that the surface portion is built up in a cabbage shape, and the central portion is built up in a random shape to form a secondary particle.

Numbers of the primary particles constituting the secondary particle are not particularly limited as long as a secondary particle may be formed, but, for example, may be 2 to 50, 2 to 40, 2 to 30, 2 to 20, 2 to 10, or 2 to 4 primary particles agglomerated to form a secondary particle.

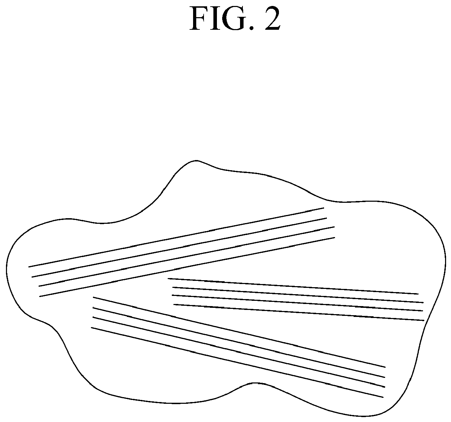

The general natural graphite is a huge particle with a particle diameter of about 40 µm to 120 µm, and thus, if the outer shape is only spheroidized to form a core, while maintaining plate structures of natural graphite without bending and crushing, as shown in FIG. 2, the inner structure is not dense and contains pores which cause a side reaction with the electrolyte and electrode expansion during cycles, thereby deteriorating the cycle-life characteristics.

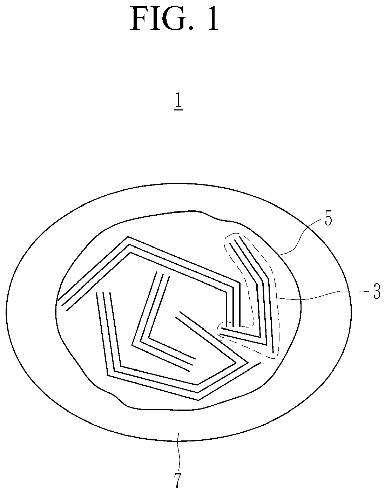

Otherwise, the core 5 in the active material 1 according to one embodiment is one in which the primary particles 3 laminated with at least one graphene are spheroidized in the form of bending, that is, is a secondary particle that is agglomerated by building it up, as shown in FIG. 1. Accordingly, a size of the natural graphite is reduced to form a dense inner structure, so that the inner pores are minimized to reduce the side reaction with the electrolyte, resultantly improving the cycle-life characteristics. FIG. 1 partially and schematically shows primary particles 3 included in the secondary particle core, but the inside structure of the secondary particle is not limited thereto.

The natural graphite may be flake-type natural graphite and it is desired since natural graphite has higher crystallinity than artificial graphite, and higher charge and discharge capacity than artificial graphite.

The primary particle may have a particle diameter of about 5 µm to about 15 µm, and for example, a particle diameter of about 5 µm to about 13 µm, about 5 µm to about 12 µm, or about 5.5 µm to about 11.5 µm. Furthermore, the secondary particle may have a particle diameter of about 8 µm to about 24 µm, and for example, a particle diameter of about 10 µm to about 24 µm, about 11 µm to about 24 µm, about 12 µm to about 24 µm, about 13 µm to about 24 µm, about 13 µm to about 23 µm, or about 13 µm to about 20 µm.

When the primary particle and the secondary particle have the particle diameters within the above range, the negative active material including them may exhibit effectively suppressed expansion and may have an increased tap density. Furthermore, the excellent output characteristics may be obtained.

The particle diameter of the primary and secondary particles may be an average particle diameter of particle diameters. Herein, the average particle diameter is a value obtained from adding a plurality of particles to a particle size analyzer and measuring, and refers to a particle diameter (D50) at a cumulative volume of 50 volume% in a cumulative size-distribution curve. That is, unless otherwise defined, the average particle diameter (D50) refers to a diameter of particles having a cumulative volume of 50 % by volume in the particle size distribution.

The average particle diameter D50 may be measured by techniques well known to those ordinarily skilled in the art, and for example, using a particle size analyzer, transmission electron microscope photography, or scanning electron microscope photography. Another method may be performed by measuring it using a measuring device with dynamic light scattering, analyzing data to count a number of particles relative to each particle size, and then calculating to obtain an average particle diameter D50.

The negative active material according to one embodiment includes a coating layer 7 surrounding the core and including amorphous carbon, as shown in FIG. 1. As the negative active material includes the coating layer including amorphous carbon, a natural graphite secondary particle is not exposed outward, and thus the natural graphite may not directly contact the electrolyte, thereby effectively inhibiting the side reaction with the electrolyte.

According to one embodiment, the secondary particle core may further include amorphous carbon filled between the primary particles. When the amorphous carbon is filled between the primary particles, the side reaction occurring by impregnating the electrolyte between the particles may be reduced and the cycle-life characteristics may be improved.

The amorphous carbon included in the coating layer or filled between the primary particles may be soft carbon, hard carbon, mesophase pitch carbide, a sintered coke, or a combination thereof.

As such, the amorphous carbon may be presented in a form of a coating layer coated on the surface of the core, and also may be presented in a form of filing between the primary particles, together with the coating layer form. In the case of presenting the amorphous carbon as the coating layer and the filling between the primary particles, the weight ratio of amorphous carbon as the presence of the coating layer and amorphous carbon filled between the primary particles may be about 95:5 to about 85:15 by weight ratio. If the amorphous carbon is presented in the negative active material at the weight ratio, the occurrence of the side reaction due to the separate presence of an amorphous carbon lump derived from the excess amorphous carbon may be suppressed. Furthermore, the total amount of the amorphous carbon in the negative active material may be about 10 wt% to about 25 wt% based on the total, 100 wt%, of the negative active material, regardless of whether the amorphous carbon is presented in the form of the coating layer and in the form of filling between the primary particles. When the amount of the amorphous carbon is within the range, the density of the active mass may be suitably realized and the decreased initial efficiency due to the amorphous carbon may not occur.

The coating layer may have a thickness of about 5 nm to about 50 nm, and according to one embodiment, for example, about 10 nm to about 50 nm or about 20 nm to about 50 nm. In the case of satisfying the range, the side reaction with the electrolyte may be effectively suppressed and the charge and discharge rate characteristics may be improved.

Such a negative active material with the above configuration has a thin coating layer with a thickness of about 5 nm to about 50 nm, as described above, so that the negative active material may have a substantially similar particle diameter to that of the secondary particle when it is measured using a particle diameter analyzer.

The negative active material may have an internal pore volume fraction of about 2 % or less, and for example, about 1.8 % or less, about 1.5 % or less, about 1.0 % to about 1.5 %, or about 1.0 % to about 1.3 %. When the internal pore volume fraction of the negative active material is within the range, the side reaction with the electrolyte may be reduced to improve the cycle-life characteristics of the rechargeable lithium battery.

Meanwhile, the method for measuring the internal pore volume fraction is as follows: firstly, the rechargeable lithium battery that was charged and discharged was disassembled to separate a negative active material layer from the negative electrode. The binder and organic materials included in the negative active material layer are removed and dried to obtain a natural graphite negative active material in the state of a powder. The pore volume of the natural graphite powder is measured and the true density of natural graphite is multiplied by it to obtain an internal pore volume fraction % of the secondary particle. Herein, the amorphous carbon remained in the surface of the natural graphite primary particle (inside of the secondary particle) and the surface of the secondary particle is not necessarily removed, as it has the same true density as natural graphite.

The negative active material may be prepared by the following procedure.

Natural graphite with a particle diameter of about 80 µm or more is pulverized and granulated to prepare a fine primary particle. The pulverization and granulation to be small may be performed by an airstream grinding method, and the airstream grinding method may be performed by grinding natural graphite at room temperature (20 °C to 25 °C) using an airstream in a condition of about 5 kg/cm² to 20 kg/cm². The pulverization may be performed for about 1 hour to about 2 hours. When the pulverization is performed for the range of time, a negative active material with the desired peak intensity ratio (I_{D}/I_{D'}) and the lattice constant La may be prepared. If the pulverization is performed for a shorter time or a longer time than the above range, it is not desired because the desired peak intensity ratio (I_{D}/I_{D'}) and lattice constant may not be obtained.

The produced fine primary particle may have a particle diameter of about 5 µm to about 15 µm, and for example, about 5 µm to about 13 µm, about 5 µm to about 12 µm, or about 5.5 µm to about 11.5 µm. Furthermore, a sieving process using a sieve may also be further performed to in order to obtain fine primary particles with the desired particle diameter of the fine primary particles. For example, a sieving process may be further performed in order to obtain a fine primary particle with a particle diameter of about 13 µm from the fine primary particles with a particle diameter of a range of about 10 µm to about 15 µm.

A spheroidization process may be performed by using the fine primary particle and spheroidization equipment to agglomerate to be a secondary particle. Such a spheroidization process may be performed by general techniques using the spheroidized equipment and is well known to the ordinarily skilled person in the related art. Thus, the detailed description will be not illustrated in the specification.

An amorphous carbon precursor is added to the produced natural graphite secondary particle to mix therewith.

The amorphous carbon precursor is not particularly limited, as long as the material turns to be a carbide, and may be a phenol resin, a furan resin, an epoxy resin, polyacrylonitrile, a polyamide resin, a polyimide resin, a polyamideimide resin, synthetic pitch, petroleum-based pitch, coal tar-based pitch, pitch carbon, tar, and a combination thereof.

The mixing process may be performed by mixing the natural graphite secondary particle and the amorphous carbon precursor at a weight ratio of about 70:30 to about 90:10 in order to maintain natural graphite and amorphous carbon at a weight ratio of about 90:10 to about 75:25, e.g., about 90:10 to about 80:20, about 90:10 to about 85:15, or about 90:10 to about 88:12 by weight ratio in the final product.

If the natural graphite secondary particle and the amorphous carbon precursor are mixed at the weight ratio to include natural graphite and amorphous carbon in the range in the final product, the amount of the amorphous carbon added to the inside of the secondary particle may be suitably controlled and the pore inside of the secondary particle may be reduced to decrease the side reaction between the electrolyte solution and to improve the degree of interior density. In preparing the coating layer including amorphous carbon on the surface of the secondary particle, the coating layer with the above thickness range may be realized, and thus, the structural stability of the natural graphite secondary particle may be obtained, the expansion of the negative active material may be prevented, and the cycle-life characteristics may be improved.

The secondary particle mixed with the amorphous carbon is sintered to heat-treat it, thereby preparing a negative active material.

The heat treatment procedure may be performed at a temperature of about 1000 °C to about 2000 °C, for example, about 1000 °C to about 1800 °C, about 1000 °C to about 1600 °C, about 1000 °C to about 1400 °C, or about 1200 °C to about 1300 °C. The heat treatment procedure may be performed for about 1 hour to about 5 hours, for example, about 1 hour to about 4 hours, about 1 hour to about 3 hours, or about 2 hours to about 3 hours.

When the heat treatment procedure is performed in the temperature range and for the above times, the inner pore volume of the secondary particle and side reaction with the electrolyte may be reduced, and the expansion of the negative active material may be suppressed, thereby improving the cycle-life characteristics.

Another embodiment provides a rechargeable lithium battery including a negative electrode including the negative active material, a positive electrode including a positive active material, and an electrolyte.

The negative electrode may include a current collector and a negative active material layer formed on the current collector.

In the negative active material layer, the negative active material may be included in an amount of 95 wt% to 99 wt% based on the total weight of the negative active material layer.

The negative active material layer may include a binder, and may further optionally include a conductive material. In the negative active material layer, an amount of the binder may be about 1 wt% to about 5 wt% based on the total weight of the negative active material layer. When the negative active material layer further includes a conductive material, the negative active material layer includes about 90 wt% to about 98 wt% of the negative active material, about 1 wt% to about 5 wt% of the binder, and about 1 wt% to about 5 wt% of the conductive material.

The binder adheres negative active material particles to each other well and also adheres negative active materials to the current collector. The binder may include a non-water-soluble binder, a water-soluble binder, or a combination thereof.

The non-water-soluble binder may be ethylene propylene copolymer, polyacrylonitrile, polystyrene, polyvinyl chloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a styrene-butadiene rubber, an acrylated styrene-butadiene rubber, an acrylonitrile-butadiene rubber, an acryl rubber, a butyl rubber, a fluorine rubber, an ethylene oxide-including polymer, polyvinyl pyrrolidone, polyepichlorohydrin, polyphosphazene, an ethylene propylene diencopolymer, polyvinyl pyridine, chloro sulfonate polyethylene, latex, a polyester resin, an acryl resin, a phenol resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropyl methyl cellulose, methyl cellulose, or alkali metal salts thereof. The alkali metals may be Na, K, or Li. The thickener may be included in an amount of 0.1 parts by weight to 3 parts by weight based on 100 parts by weight of the negative active material.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, denka black, a carbon fiber, and the like; a metal-based material of a metal powder or a metal fiber including copper, nickel, aluminium, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The positive electrode may include a positive current collector and a positive active material layer formed on the positive current collector. The positive active material may include compounds that reversibly intercalate and deintercalate lithium ions (lithiated intercalation compounds). Specifically, it may include one or more composite oxides of a metal selected from cobalt, manganese, nickel, and a combination thereof, and lithium. Specifically, it may include one or more composite oxides of a metal selected from cobalt, manganese, nickel, and a combination thereof, and lithium. More specific examples may be compounds represented by one of the following chemical formulae. LiₐA_{1-b}X_{b}D₂ (0.90 ≤ a ≤1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}D_{α} (0.90 ≤ a ≤ 1.8, 0 ≤ b ≤ 0.5, 0 ≤ c ≤ 0.5, 0 ≤ α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤ 0.5, 0 ≤ α < 2); LiₐNi_{1-b-c}Co_{b}X_{c}O_{2-α}T₂ (0.90 ≤ a ≤ 1.8, 0 ≤ b ≤ 0.5, 0 ≤ c ≤ 0.5, 0 ≤ α < 2); LiₐNi_{1-b-c}Mn_{b}X_{c}D_{α} (0.90 ≤ a ≤ 1.8, 0 ≤ b ≤ 0.5, 0 ≤ c ≤ 0.05, 0 ≤ α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.5, 0 ≤ α ≤ 2); LiₐNi_{1-b-c}Mn_{b}X_{c}O_{2-α}T₂ (0.90 ≤ a ≤ 1.8, 0 ≤ b ≤ 0.5, 0 ≤ c ≤ 0.5, 0 ≤ α ≤ 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GeO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1); LiₐCₒG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O5; LiV₂O5; LiZO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiaFePO₄ (0.90 ≤ a ≤ 1.8).

In the chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known in the related field.

In the positive electrode, an amount of the positive active material may be 90 wt% to 98 wt% based on the total weight of the positive active material layer.

In one embodiment, the positive active material layer may further include a binder and a conductive material. Herein, each amount of the binder and the conductive material may be about 1 wt% to about 5 wt%, respectively, based on a total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinyl chloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to provide electrode conductivity. Any electrically conductive material may be used as a conductive material unless it causes a chemical change in a battery. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may be an aluminium foil, a nickel foil, or a combination thereof, but is not limited thereto.

The electrolyte may include a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, propyl propionate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent may include cyclohexanone and the like. The alcohol-based solvent may include ethanol, isopropyl alcohol, and the like, and the aprotic solvent may include nitriles such as R-CN (wherein R is a hydrocarbon group having a C2 to C20 linear, branched, or cyclic structure and may include a double bond, an aromatic ring, or an ether bond) and the like, dioxolanes such as 1,3-dioxolane and the like, and sulfolanes and the like.

The non-aqueous organic solvent may be used alone or in a mixture. When the organic solvent is used in a mixture, the mixture ratio may be controlled in accordance with a desirable battery performance.

The carbonate-based solvent may include a mixture with a cyclic carbonate and a linear (chain) carbonate. The cyclic carbonate and linear carbonate are mixed together in a volume ratio of 1:1 to 1:9, which may provide enhanced performance of an electrolyte.

The organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 1.

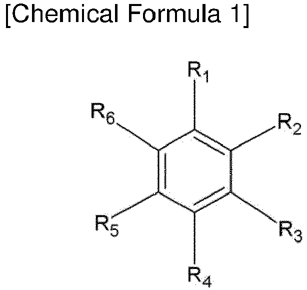

In Chemical Formula 1, R₁ to R₆ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate or an ethylene carbonate-based compound represented by Chemical Formula 2 in order to improve a battery cycle-life.

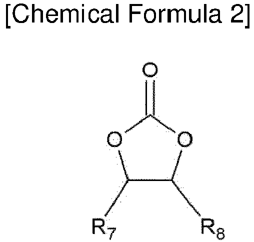

In Chemical Formula 2, R₇ and R₈ are the same or different, and are selected from hydrogen, a halogen, a cyano group (CN), a nitro group (NO₂), and a fluorinated C1 to C5 alkyl group, provided that at least one of R₇ and R₈ is selected from a halogen, a cyano group (CN), a nitro group (NO₂), and a fluorinated C1 to C5 alkyl group, and R₇ and R₈ are not simultaneously hydrogen.

Examples of the ethylene carbonate-based compound may be difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. When such an additive for improving cycle-life is further used, the amount may be controlled within an appropriate range.

The lithium salt dissolved in an organic solvent supplies a battery with lithium ions, basically operates the rechargeable lithium battery, and improves transportation of the lithium ions between positive and negative electrodes. Examples of the lithium salt include at least one supporting salt selected from LiPF₆, LiBF4, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers, for example an integer of 1 to 20), LiCI, Lil, and LiB(C₂O₄)₂ (lithium bis(oxalato) borate; LiBOB). A concentration of the lithium salt may range from 0.1 M to 2.0 M. When the lithium salt is included at the above concentration range, an electrolyte may have excellent performance and lithium ion mobility due to optimal electrolyte conductivity and viscosity.

In addition, a separator may be disposed between the positive electrode and the negative electrode depending on a type of the rechargeable lithium battery. Such a separator may include polyethylene, polypropylene, polyvinylidene fluoride, and multi-layers thereof such as a polyethylene/polypropylene double-layered separator, a polyethylene/polypropylene/polyethylene triple-layered separator, or a polypropylene/polyethylene/polypropylene triple-layered separator.

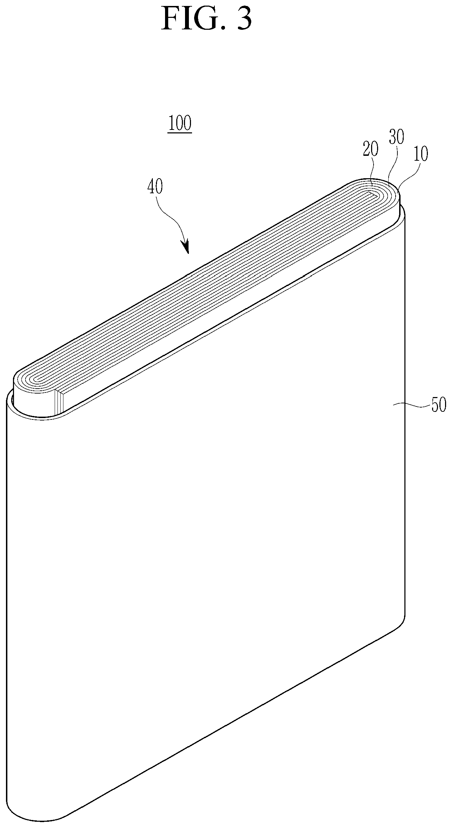

FIG. 3 is an exploded perspective view of a rechargeable lithium battery according to an embodiment. The rechargeable lithium battery according to an embodiment is illustrated as a prismatic battery but is not limited thereto and may include variously-shaped batteries such as a cylindrical battery, a pouch-type battery, and the like.

Referring to FIG. 3, a rechargeable lithium battery 100 according to an embodiment includes a wound electrode assembly 40 including a positive electrode 10, a negative electrode 20, and a separator 30 disposed therebetween, and a case 50 housing the electrode assembly 40. The positive electrode 10, the negative electrode 20, and the separator 30 may be impregnated with an electrolyte solution (not shown).

Hereinafter, examples of the present invention and comparative examples are described. However, the present invention is not limited to the following examples.

### (Example 1)

Natural graphite with an average particle diameter D50 of 80 µm was airstream ground at 25 °C under a condition of 20 kg/cm² for 1 hour to prepare a fine primary particle with an average particle diameter D50 of 11 µm. Using the fine primary particle and spheroidization equipment (product name: F500), a secondary particle with an average particle diameter D50 of 19.7 µm was prepared.

The secondary particle was mixed with a pitch carbon amorphous carbon precursor at a weight ratio of 70:30, and then the mixture was heat-treated in a 1200 °C sintering furnace for 2 hours to prepare a negative active material. The prepared negative active material included a secondary particle core agglomerated with natural graphite primary particles and a soft carbon amorphous carbon coating layer surrounding the core, and soft carbon amorphous carbon filled between the primary particles. The core had a cabbage shape by randomly building up and agglomerating at least one primary particle and was positioned on the inside, and the coating layer was surrounded on the core and was positioned on a surface portion (outward). In the prepared negative active material, the thickness of the carbon amorphous carbon coating layer was 27 nm.

The negative active material of 97.5 wt%, carboxymethyl cellulose of 1.0 wt%, and styrene-butadiene rubber of 1.5 wt% were mixed in distilled water to prepare a negative active material slurry composition.

The negative active material slurry composition was coated on a Cu current collector and dried, followed by compressing to prepare a negative electrode for a rechargeable lithium battery.

Using the negative electrode, a lithium metal counter electrode, and an electrolyte solution, a half-cell was fabricated. As the electrolyte solution, 1M LiPF₆ dissolved in a mixed solvent of ethylene carbonate and dimethyl carbonate (3:7 volume ratio) was used.

### (Example 2)

Natural graphite with an average particle diameter D50 of 80 µm was airstream ground at 25 °C under a condition of 20 kg/cm² for 1 hour to prepare a fine primary particle with an average particle diameter D50 of 11 µm. Using the fine primary particle and spheroidization equipment (product name: F500), a secondary particle with an average particle diameter D50 of 22.6 µm was prepared.

The secondary particle was mixed with a pitch carbon amorphous carbon precursor at a weight ratio of 75 : 25, and then the mixture was heat-treated in a 1200 °C sintering furnace for 2 hours to prepare a negative active material. The prepared negative active material included a secondary particle core agglomerated with natural graphite primary particles and a soft carbon amorphous carbon coating layer surrounding the core, and soft carbon amorphous carbon filled between the primary particles. The core had a cabbage shape by randomly building up and agglomerating at least one primary particle and was positioned on the inside, and the coating layer surrounded the core and was positioned on a surface portion (outward). In the prepared negative active material, the thickness of the carbon amorphous carbon coating layer was 38 nm.

Using the negative active material, a negative electrode for a rechargeable lithium battery and a half-cell were fabricated by the same procedure as in Example 1.

### (Example 3)

Natural graphite with an average particle diameter D50 of 80 µm was airstream ground at 25 °C under a condition of 20 kg/cm² for 1 hour to prepare a fine primary particle with an average particle diameter D50 of 10 µm. Using the fine primary particle and spheroidization equipment (product name: F500), a secondary particle with an average particle diameter D50 of 18.3 µm was prepared.

The secondary particle was mixed with a pitch carbon amorphous carbon precursor at a weight ratio of 75:25, and then the mixture was heat-treated in a 1200 °C sintering furnace for 2 hours to prepare a negative active material. The prepared negative active material included a secondary particle core agglomerated with natural graphite primary particles and a soft carbon amorphous carbon coating layer surrounding the core, and soft carbon amorphous carbon filled between the primary particles. The core had a cabbage shape by randomly building up and agglomerating at least one primary particle and was positioned on the inside and the coating layer surrounded the core and was positioned on a surface portion (outward). In the prepared negative active material, the thickness of the carbon amorphous carbon coating layer was 46 nm.

Using the negative active material, a negative electrode for a rechargeable lithium battery and a half-cell were fabricated by the same procedure as in Example 1.

### (Example 4)

Natural graphite with an average particle diameter D50 of 80 µm was airstream ground at 25 °C under a condition of 25 kg/cm² for 1 hour to prepare a fine primary particle with an average particle diameter D50 of 9 µm. Using the fine primary particle and spheroidization equipment (product name: F500), a secondary particle with an average particle diameter D50 of 13.5 µm was prepared.

The secondary particle was mixed with a pitch carbon amorphous carbon precursor at a weight ratio of 70:30, and then the mixture was heat-treated in a 1200 °C sintering furnace for 2 hours to prepare a negative active material. The prepared negative active material included a secondary particle core agglomerated with natural graphite primary particles and a soft carbon amorphous carbon coating layer surrounding the core, and soft carbon amorphous carbon filled between the primary particles. The core had a cabbage shape by randomly building up and agglomerating at least one primary particle and was positioned on the inside and the coating layer surrounded the core and was positioned on a surface portion (outward). In the prepared negative active material, the thickness of the carbon amorphous carbon coating layer was 15 nm.

Using the negative active material, a negative electrode for a rechargeable lithium battery and a half-cell were fabricated by the same procedure as in Example 1.

### (Example 5)

Natural graphite with an average particle diameter D50 of 80 µm was airstream ground at 25 °C under a condition of 25 kg/cm² for 2 hours to prepare a fine primary particle with an average particle diameter D50 of 8 µm. Using the fine primary particle and spheroidization equipment (product name: F500), a secondary particle with an average particle diameter D50 of 8.7 µm was prepared.

The secondary particle was mixed with a pitch carbon amorphous carbon precursor at a weight ratio of 70:30, and then the mixture was heat-treated in a 1200 °C sintering furnace for 2 hours to prepare a negative active material. The prepared negative active material included a secondary particle core agglomerated with natural graphite primary particles and a soft carbon amorphous carbon coating layer surrounding the core, and soft carbon amorphous carbon filled between the primary particles. The core had a cabbage shape by randomly building up and agglomerating at least one primary particle and was positioned on the inside and the coating layer surrounded the core and was positioned on a surface portion (outward). In the prepared negative active material, the thickness of the carbon amorphous carbon coating layer was 22 nm.

Using the negative active material, a negative electrode for a rechargeable lithium battery and a half-cell were fabricated by the same procedure as in Example 1.

### (Example 6)

Natural graphite with an average particle diameter D50 of 80 µm was airstream ground at 25 °C under a condition of 25 kg/cm² for 1 hour to prepare a fine primary particle with an average particle diameter D50 of 9 µm. Using the fine primary particle and spheroidization equipment (product name: F500), a secondary particle with an average particle diameter D50 of 15.2 µm was prepared.

The secondary particle was mixed with a pitch carbon amorphous carbon precursor at a weight ratio of 75:25, and then the mixture was heat-treated in a 1200 °C sintering furnace for 2 hours to prepare a negative active material. The prepared negative active material included a secondary particle core agglomerated with natural graphite primary particles and a soft carbon amorphous carbon coating layer surrounding the core, and soft carbon amorphous carbon filled between the primary particles. The core had a cabbage shape by randomly building up and agglomerating at least one primary particle and was positioned on the inside and the coating layer surrounded the core and was positioned on a surface portion (outward). In the prepared negative active material, the thickness of the carbon amorphous carbon coating layer was 7 nm.

Using the negative active material, a negative electrode for a rechargeable lithium battery and a half-cell were fabricated by the same procedure as in Example 1.

### (Comparative Example 1)

Natural graphite with an average particle diameter D50 of 80 µm was airstream ground at 25 °C under a condition of 10 kg/cm² for 30 minutes to prepare a fine primary particle with an average particle diameter D50 of 18 µm. Using the fine primary particle and spheroidization equipment (product name: F500), a secondary particle with an average particle diameter D50 of 29.6 µm was prepared.

The secondary particle was mixed with a pitch carbon amorphous carbon precursor at a weight ratio of 80:20, and then the mixture was heat-treated in a 1200 °C sintering furnace for 2 hours to prepare a negative active material. The prepared negative active material included a secondary particle core agglomerated with natural graphite primary particles and a soft carbon amorphous carbon coating layer surrounding the core, and soft carbon amorphous carbon filled between the primary particles. The core had a cabbage shape by randomly building up and agglomerating at least one primary particle and was positioned on the inside and the coating layer surrounded the core and was positioned on a surface portion (outward). In the prepared negative active material, the thickness of the carbon amorphous carbon coating layer was 78 nm.

Using the negative active material, a negative electrode for a rechargeable lithium battery and a half-cell were fabricated by the same procedure as in Example 1.

### (Comparative Example 2)

Natural graphite with an average particle diameter D50 of 120 µm was airstream ground at 25 °C under a condition of 10 kg/cm² for 30 minutes to prepare a fine primary particle with an average particle diameter D50 of 18 µm. Using the fine primary particle and spheroidization equipment (product name: F500), a secondary particle with an average particle diameter D50 of 28.0 µm was prepared.

The secondary particle was mixed with a pitch carbon amorphous carbon precursor at a weight ratio of 80:20, and then the mixture was heat-treated in a 1200 °C sintering furnace for 2 hours to prepare a negative active material. The prepared negative active material included a secondary particle core agglomerated with natural graphite primary particles and a soft carbon amorphous carbon coating layer surrounding the core, and soft carbon amorphous carbon filled between the primary particles. The core had a cabbage shape by randomly building up and agglomerating at least one primary particle and was positioned on the inside and the coating layer surrounded the core and was positioned on a surface portion (outward). In the prepared negative active material, the thickness of the carbon amorphous carbon coating layer was 26 nm.

Using the negative active material, a negative electrode for a rechargeable lithium battery and a half-cell were fabricated by the same procedure as in Example 1.

### (Comparative Example 3)

Natural graphite with an average particle diameter D50 of 100 µm was airstream ground at 25 °C under a condition of 10 kg/cm² for 30 minutes to prepare a fine primary particle with an average particle diameter D50 of 16 µm. Using the fine primary particle and spheroidization equipment (product name: F500), a secondary particle with an average particle diameter D50 of 25.2 µm was prepared.

The secondary particle was mixed with a pitch carbon amorphous carbon precursor at a weight ratio of 75:25, and then the mixture was heat-treated in a 1200 °C sintering furnace for 2 hours to prepare a negative active material. The prepared negative active material included a secondary particle core agglomerated with natural graphite primary particles and a soft carbon amorphous carbon coating layer surrounding the core, and soft carbon amorphous carbon filled between the primary particles. The core had a cabbage shape by randomly building up and agglomerating at least one primary particle and was positioned on the inside and the coating layer surrounded the core and was positioned on a surface portion (outward). In the prepared negative active material, the thickness of the carbon amorphous carbon coating layer was 33 nm.

Using the negative active material, a negative electrode for a rechargeable lithium battery and a half-cell were fabricated by the same procedure as in Example 1.

### (Comparative Example 4)

Natural graphite with an average particle diameter D50 of 80 µm was airstream ground at 25 °C under a condition of 10 kg/cm² for 20 minutes to prepare a fine primary particle with an average particle diameter D50 of 16 µm. Using the fine primary particle and spheroidization equipment (product name: F500), a secondary particle with an average particle diameter D50 of 26.1 µm was prepared.

The secondary particle was mixed with a pitch carbon amorphous carbon precursor at a weight ratio of 75:25, and then the mixture was heat-treated in a 1200 °C sintering furnace for 2 hours to prepare a negative active material. The prepared negative active material included a secondary particle core agglomerated with natural graphite primary particles and a soft carbon amorphous carbon coating layer surrounding the core, and soft carbon amorphous carbon filled between the primary particles. The core had a cabbage shape by randomly building up and agglomerating at least one primary particle and was positioned on the inside and the coating layer surrounded the core and was positioned on a surface portion (outward). In the prepared negative active material, the thickness of the carbon amorphous carbon coating layer was 31 nm.

Using the negative active material, a negative electrode for a rechargeable lithium battery and a half-cell were fabricated by the same procedure as in Example 1.

### * SEM photograph measurement

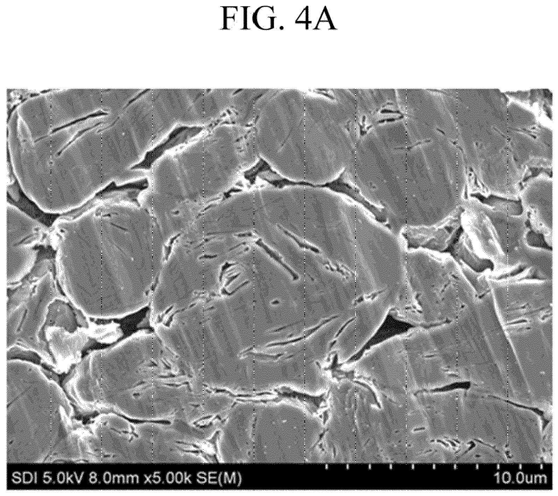

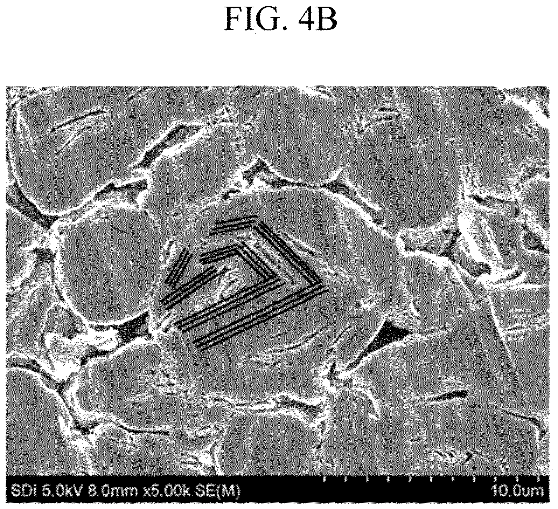

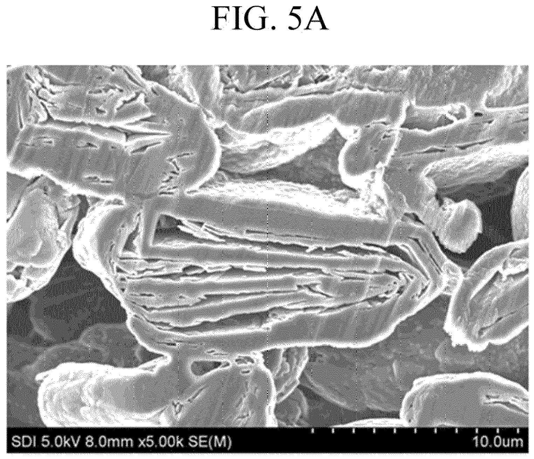

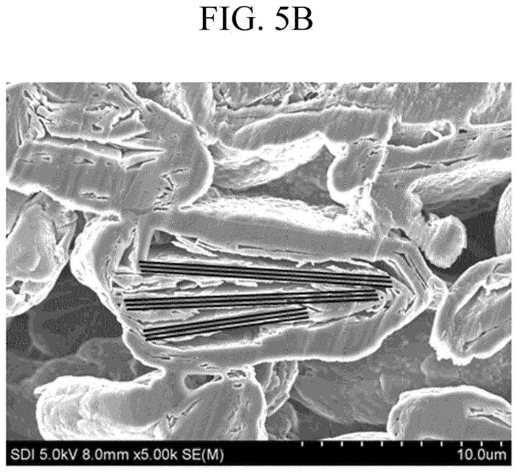

SEM photographs for the negative active materials according to Example 1 and the Comparative Example 1 are shown in FIG. 4A and FIG. 5A, respectively. The drawing in which a schematic drawing of the negative active materials of FIG. 1 and FIG. 2 were added to FIG. 4A and FIG. 5A are shown in FIG. 4B and FIG. 5B, respectively.

As shown in FIG. 4A and FIG. 4B, the negative active material according to Example 1 had an agglomeration shape by spheroidizing the primary particles on which graphenes were laminated in a random bending state, that is, had a cabbage shape by building up and agglomerating to form a dense internal structure, and very small pores.

Whereas, as shown in FIG. 5A and FIG. 5B, the negative active material according to Comparative Example 1 had large particles and an agglomerated shape by spheroidizing only outward while a plate type was maintained, so that it had no dense internal structure and very large pores.

### * Measurement of Raman spectrum

Raman spectrum of negative active materials according to Examples 1 to 6 and Comparative Examples 1 to 4 was measured using a laser of a 514 nm wavelength and a peak intensity ratio (I_{D}/I_{D'}) of a peak intensity (I_{D}) of a D peak (1350 cm⁻¹) to a peak intensity (I_{D'}) of a D' peak (1620 cm⁻¹) was obtained. The results are shown in Table 1.

### * Measurement of lattice constant La

Lattice constants La of negative active materials according to Examples 1 to 6 and Comparative Examples 1 to 4 were obtained by measuring X-ray diffraction using a CuKα ray as a target ray.

The measurement for the X-ray diffraction was measured under the measurement condition of in the range of 2θ = 10° to 90° and power of 40 kV and 100 mA, time/ step (time per step) 27.41 s, and step size (°/step) of 0.013.

### * Evaluation of charge rate and discharge rate characteristic

Half-cells according to Examples 1 to 6 and Comparative Examples 1 to 4 were charged and discharged at 0.2C once, at 2.0C once, and at 3.0C once to measure charge and discharge capacities. The ratio of 2.0C charge capacity to 0.2C charge capacity refers to a charge rate characteristic, and the ratio of 3.0C discharge capacity to 0.2C discharge capacity refers to a discharge rate characteristic. The results are shown in Table 1.

**Table 1**

| | Type of graphite | Peak intensity ratio (I_{D}/I_{D'}) | Lattice constant (La, nm) | Chargeable rate characteristic (%) | Discharge rate characteristic (%) |
|---|---|---|---|---|---|
| Example 1 | natural graphite | 3.4 | 34.13 | 44 | 99 |
| Example 2 | natural graphite | 3.3 | 36.77 | 39 | 96 |
| Example 3 | natural graphite | 3.2 | 32.61 | 42 | 98 |
| Example 4 | natural graphite | 3.5 | 41.08 | 36 | 95 |
| Example 5 | natural graphite | 3.2 | 43.12 | 43 | 98 |
| Example 6 | natural graphite | 3.3 | 37.32 | 37 | 96 |
| Com parative Example 1 | natural graphite | 5.2 | 60.69 | 24 | 85 |
| Com parative Example 2 | natural graphite | 6.6 | 57.82 | 28 | 87 |
| Com parative Example 3 | natural graphite | 4.9 | 35.11 | 25 | 85 |
| Com parative Example 4 | natural graphite | 3.4 | 58.26 | 31 | 89 |

As shown in Table 1, the half-cells according to Examples 1 to 6 using negative active materials including natural graphite as a core and having a peak intensity ratio (I_{D}/I_{D'}) within the range of 3.2 to 3.8, and a lattice constant La of 30 nm to 45 nm, exhibited excellent charge rate and discharge rate characteristics.

Whereas, Comparative Example 1 using a negative active material regardless of including natural graphite as a core, having a high peak intensity ratio (I_{D}/I_{D'}) of 5.2, and a high lattice constant La of 60.69 nm, exhibited surprisingly deteriorated charge rate and discharge rate characteristics. Comparative Example 2 using a negative active material including a natural graphite as a core, having a high peak intensity ratio (I_{D}/I_{D'}) of 6.6 and a lattice constant La of 57.82 nm, also exhibited deteriorated charge rate and discharge rate characteristics.

Comparative Example 3 using a negative active material including natural graphite as a core and having a lattice constant La of 35.11 nm, but a high peak intensity ratio (I_{D}/I_{D'}) of 4.9, exhibited abruptly deteriorated charge rate and discharge rate characteristics.

Furthermore, Comparative Example 4 using natural graphite as a core and having a peak intensity ratio (I_{D}/I_{D'}) of 3.4, but having a lattice constant La of a large value of 58.26 nm, exhibited the deteriorated charge rate and discharge rate characteristics.

While this invention has been described in connection with what is presently considered to be practical embodiments, it is to be understood that the invention is not limited to the disclosed embodiments. On the contrary, it is intended to cover various modifications and equivalent arrangements included within the scope of the appended claims.

## Claims

1. A negative active material for a rechargeable lithium battery, comprising:
a core of a secondary particle in which a plurality of primary particles are agglomerated, the primary particles comprising a natural graphite; and
a coating layer including amorphous carbon and surrounding the core, wherein, in Raman spectrum analysis of the negative active material, a peak intensity ratio (I_{D}/I_{D'}) of a peak intensity (I_{D}) of a D peak (1350 cm⁻¹ to 1370 cm⁻¹) to a peak intensity (I_{D'}) of a D' peak (1570 cm⁻¹ to 1620 cm⁻¹) is about 3.2 to about 3.8, and
a lattice constant La is about 30 nm to about 45 nm.

2. A negative active material for a rechargeable lithium battery according to claim 1, wherein the lattice constant La is about 40 nm to about 45 nm.

3. A negative active material for a rechargeable lithium battery according to claim 1 or claim 2, wherein the natural graphite is a flake-type natural graphite.

4. A negative active material for a rechargeable lithium battery according to any one of claims 1 to 3, wherein the secondary particle further comprises amorphous carbon filled between the primary particles.

5. A negative active material for a rechargeable lithium battery according to any one of claims 1 to 4, wherein the coating layer has a thickness of about 5 nm to about 50 nm.

6. A negative active material for a rechargeable lithium battery according to any one of claims 1 to 5, wherein the core has a cabbage shape by randomly bulbing up and agglomerating at least one primary particle.

7. A negative active material for a rechargeable lithium battery according to any one of claims 1 to 6, wherein the secondary particle has a particle diameter about 8 µm to about 24 µm.

8. A rechargeable lithium battery, comprising
a negative electrode comprising a negative active material according to any one of claims 1 to 7;
a positive electrode comprising a positive active material; and
an electrolyte.
